# EUROPEAN PATENT SPECIFICATION

(11) **EP 2 423 145 B1**
(45) Date of publication and mention of the grant of the patent: **12.06.2013**
(21) Application number: 11178990.5
(22) Date of filing: 26.08.2011
(51) Int. Cl.: H02K 5/00, B66C 1/10, B66C 1/66, H02K 7/00

(54) **Canopy for a machine**
Verdeck für eine Maschine
Auvent pour une machine

(30) Priority: 27.08.2010 GB 201014375
(43) Date of publication of application: 29.02.2012
(73) Proprietor: Cummins Power Generation Limited, Ramsgate, Kent CT12 5BF (GB)
(72) Inventor: Higgins, Claire, Ramsgate, Kent CT12 5BF (GB); Hawkins, Stuart, Ramsgate, Kent CT12 5BF (GB)
(74) Representative: Williams, Michael Ian

(56) References cited:
- EP-A2- 0 061 255
- EP-A2- 1 826 169
- WO-A2-2008/024686
- US-A- 4 666 034

## Description

This invention relates to an enclosure or canopy for enclosing a machine such as a generator set, and in particular to a lifting frame for such a canopy.

Machines such as generator sets are often provided with a canopy which encloses the machine, in order to provide protection and to reduce noise. Such canopies are normally made from sheet metal. Since the sheet metal may not have sufficient strength to permit lifting of the machine, the canopy may have a reinforced lifting frame which can be attached to a lifting eye which may be used to lift the enclosed machine or plant. The frame commonly comprises two side strops attached to the base of the machine, each having a lifting eye at the top. Alternatively, the frame also has a cross member at the top, and a single lifting eye attached in the middle.

GB 2435503 shows a plant enclosure in which the lifting frame is configured such that the lifting eyes are provided in a recess, such that the plant may be stacked on top of one another.

Previously, canopies have been produced with lifting frames either having a single lifting eye in the centre, or having a pair of lifting eyes one on each side, depending upon customer requirements. This means that two different canopies have to be produced for any given machine or range of machines, and once the canopy is fitted to the machine, the lifting arrangement cannot be altered.

WO 2008/024686 discloses a housing for a generator set, the housing comprising a hinged front hood and rear hood. A lifting arch extends upwards between the two hoods to provide a single lifting point. The lifting arch includes a pair of vertical support braces and a horizontal cross brace. The cross brace may be removed to improve access to the engine and the generator

According to one aspect of the present invention there is provided a canopy for enclosing a machine mounted on a base, the canopy comprising:
a pair of opposed upright lifting frame members for operable connection with a base of the machine, the upright members each being arranged to be attached to a pair of lifting members for lifting the enclosed machine from two spaced locations; and
a removable spanning member arranged to be operably connectable between the upright members and arranged to be attached to a single lifting member located between the ends of the spanning member for lifting the enclosed machine about a central location, thereby to provide an interchangeable two point or one point lifting system.

Thus the canopy is adaptable for use either with a single or double-point lifting system. This has the advantage that a single canopy may be produced for a particular machine or range of machines, and may be adapted according to the customer requirement. Typically a single point lifting system is more expensive than a two point lifting system, because of the need to provide additional strength within the structure of the canopy. The present invention may allow a canopy with a two point lifting system to be provided at lower cost, but with the option to modify the canopy to a single point lifting system at a later date.

Preferably the removable spanning member is provided inside the canopy. This can facilitate the use of a single canopy for both single point and two-point lifting systems and allow the number of external parts to be minimised. However, the removable spanning member could also be provided externally to the canopy if desired.

Preferably the spanning member is removable from the upright members without removing the canopy from the machine. For example, the spanning member may be accessible through a door or removable panel in the canopy. This can allow the canopy to be changed from a two-point lifting system to a one-point lifting system or vice versa in situ without the need to remove the canopy or any internal components.

Conveniently, the canopy may include a recess formed in the top of the canopy for accommodating the pair of lifting members and/or the single lifting member such that they do not protrude outside of the dimensions of the canopy. Thus the enclosed machines may be stacked one on top of the other.

Preferably the canopy includes an aperture through which the single lifting member can project. For example, the single lifting member could be inserted through the aperture, and then attached to the spanning member. The aperture is preferably provided in the recess, to allow the single lifting member to be accessible from outside the canopy, but not to protrude beyond the dimensions of the canopy.

The pair of lifting members may comprise lifting eyes or plates having eyes. The pair of lifting members may be provided with at least one bolt hole corresponding to bolt holes in the upright members. The spanning member may be provided with at least one bolt hole at each end thereof corresponding to the bolt holes in the upright members. This can allow the same holes which are used for attaching the pair of lifting members also to be used for attaching the spanning member, thereby facilitating interchangeability between two point and single point lifting systems.

A single lifting member or lifting eye may be attached to the spanning member. Preferably the single lifting member is removably attached to the spanning member, for example to allow the single lifting member to be inserted through an aperture in the canopy and then attached to the spanning member. Preferably the single lifting member is attached centrally to the spanning member.

Preferably a spacer is provided between the spanning member and the canopy. This may facilitate connection and disconnection of the spanning member, and may help to prevent distortion of or damage to the canopy in use.

Preferably the upright lifting frame members are provided integrally with the canopy for enclosing the machine, which can allow an integral canopy and lifting system to be provided.

In a preferred embodiment of the invention, the canopy is for enclosing a generator set.

According to another aspect of the present invention there is provided a method of modifying a canopy which encloses a machine, the canopy comprising a pair of opposed upright lifting frame members connected to a base of the machine, the upright members each being attached to a pair of lifting members for lifting the enclosed machine from two spaced locations, the method comprising:
removing the lifting members from the upright frame members; and
connecting a removable spanning member between the upright members, the removable spanning member including a single lifting member located between the ends of the spanning member for lifting the enclosed machine about a central location, thereby modifying the canopy from a two point lifting system to a one point lifting system.

Features of one aspect of the invention may be provided with any other aspect. Apparatus features may be provided with method aspects, and vice versa.

Preferred features of the present invention will now be described, purely by way of example, with reference to the accompanying drawings, in which:
Figure 1 is a perspective view of a canopy enclosing a machine according to one embodiment of the invention;
Figure 2 is an enlarged view of a part of the canopy of Figure 1;
Figure 3 is a perspective view of a spanning member of the lifting frame within the canopy of Figure 1;
Figure 4 is a view of an end part of the spanning member of Figure 3;
Figure 5 is a perspective view of the lifting frame from above; and
Figure 6 is a perspective view of the lifting frame from below.

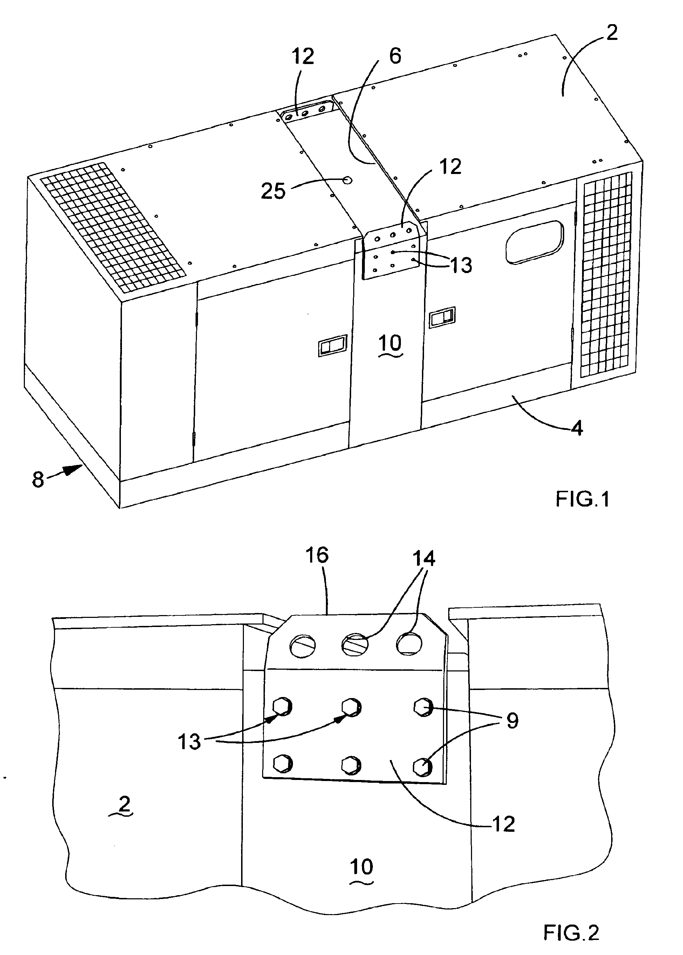

Referring to Figure 1, the canopy 2 for enclosing a machine or plant is substantially cuboid in shape, and may be formed of sheet metal. The machine or plant is mounted on a base 4. A lifting frame comprises a pair of opposed upright lifting frame members 10. The upright lifting frame members, or side strops, are operatively attached to the base 8 of the machine. A recess 6 is formed in the top of the canopy 2, in the form of a recessed channel in the canopy, extending between the upper ends of the side strops 10.

Referring now to Figure 2, a pair of plates 12 is provided for attachment to the side members 10. The plates are substantially rectangular and include one or more apertures 14 forming lifting eyes adjacent the top edge thereof. The plates have a width slightly smaller than the width of the side members and recessed channel. The plates further comprise a plurality of bolt holes 13 for aligning with corresponding bolt holes in the side members, so as to be secured to the top end of each strop by a plurality of bolts 9. The top edge 16 of the plates projects above the top of the strop but within the height of the recess 6. The projecting edge 16 of the plates may be angled inwardly such that they do not protrude outside of the dimensions of the canopy 2.

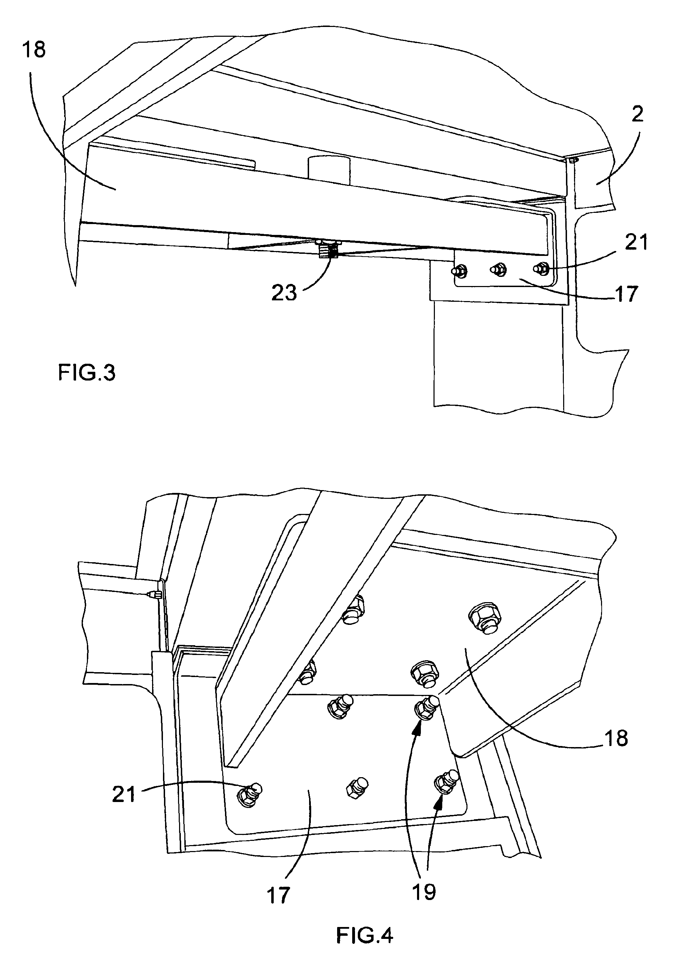

Referring now to Figures 3 and 4, a spanning member 18 comprises an elongate U-shaped member with a plurality of bolt holes 19 provided in end plates 17 at either end of the member 18. Thus the spanning member 18 may be optionally connected between the pair of strops with corresponding bolts 21. As shown in the drawings, the bolt holes 19 may be arranged to be aligned with the same bolt holes in the side members which may be used to connect the pair of plates 12.

The spanning member 18 also comprises a central aperture through which the shaft of a single lifting eye 23 is connected. The single lifting eye is attached to the spanning member 18 using a locking nut assembly. The single lifting eye projects through the spanning member 18 and above the upper surface of the recessed channel through a further aperture 25 in the canopy, but remains within the height of the recess 6.

That the plates 12 and single lifting eye remain within the dimensions of the canopy 2 allows the stacking of the enclosed machines one on top of another.

The canopy 2 is sized such that there is a space above the machine or plant enclosed within the canopy 2 allowing the spanning member 18 to be connected and disconnected to the canopy 2 whilst it is in place over the machine or plant. Likewise, the single lifting eye can be inserted through and removed from the spanning member 18 when the spanning member 18 is connected in place between the pair of strops. The aperture 25 in the canopy allows the lifting eye to be inserted through the canopy, with the canopy in place. The pair of plates 12 can also be attached and removed when the canopy 2 is in place enclosing the machine.

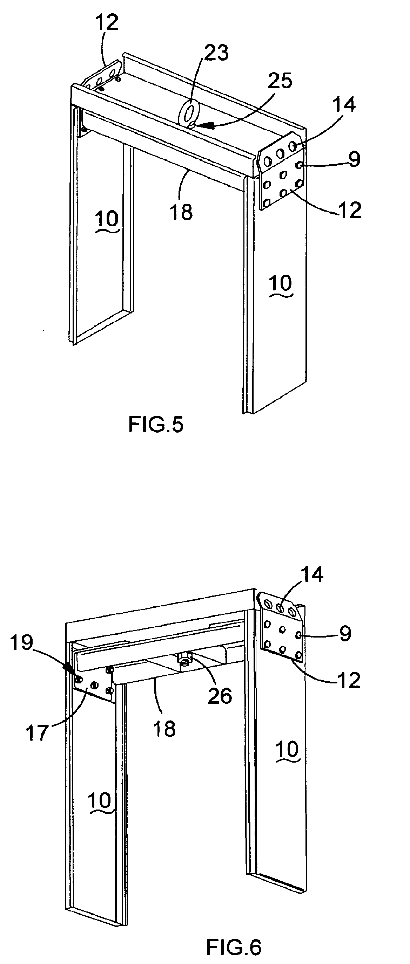

Figure 5 is a perspective view of the lifting frame. In Figure 5 the rest of the canopy has been omitted in order to more clearly illustrate the lifting frame. The lifting frame comprises upright lifting frame members 10, which in use are attached to the base of the machine (not shown). Plates 12 are attached to the top of the frame members 10 by means of bolts 9. The plates 12 have lifting eyes 14, and provide a two point lifting system.

Also shown in Figure 5 is spanning member 18 which is connected between the frame members 10. A lifting eye 23 is attached to the spanning member 18 through an aperture 25 in the upper surface of the canopy. A locking nut assembly (not visible in Figure 5) is used to attach the lifting eye 23 to the spanning member 18. The lifting eye 23 is used to provide a single point lifting system.

Figure 6 is a perspective view of the lifting frame from below. The spanning member 18 comprises end plates 17 which include bolt holes 19. The bolt holes 19 are used to connect the spanning member 18 to the frame members 10 using the same bolt holes which are used to attach the plates 12. A locking nut assembly 26 is used to attach the lifting eye 23 to the spanning member 18.

In the arrangement of Figures 5 and 6, the spanning member 18 and the plates 12 are both shown in place. In this arrangement, the spanning member 18 is connected to the frame members 10 by means of the same bolts which are used to connect the plates 12. However it will be appreciated that, when a single point lifting system is being used, the plates 12 could be removed, and the bolts used solely to connect the spanning member 18 to the frame members 10. Conversely, when a two point lifting system is being used, the spanning member 18 could be removed.

Typically, the canopy would be supplied initially with a two-point lifting system. This can allow the cost of the canopy to be kept down, by avoiding the need to provide the extra strength necessary for a single point lifting system. If a single point lifting system is subsequently required, the plates 12 would first be removed, and the spanning member 18 then connected using the bolt holes previously used to connect the plates. The lifting eye 23 would then be inserted through the aperture 25 in the canopy and a corresponding aperture in the spanning member, and attached to the spanning member using locking nut assembly 26. In order to convert back to a two point system, the reverse procedure would be carried out.

Hence, the canopy 2 can be equipped with either a double-point lifting system comprising the pair of plates 12 or a single-point lifting system comprising the spanning member 18 and single lifting eye, and can be easily reconfigured after assembly within the same space constraints.

## Claims

1. A canopy for enclosing a machine mounted on a base, the canopy comprising:
a pair of opposed upright lifting frame members (10) for operable connection with a base (4) of the machine, the upright members each being arranged to be attached to a pair of lifting members (12) for lifting the enclosed machine from two spaced locations;
**characterised by**:
a removable spanning member (18) arranged to be operably connectable between the upright members (10) and arranged to be attached to a single lifting member (23) located between the ends of the spanning member (18) for lifting the enclosed machine about a central location, thereby to provide an interchangeable two point or one point lifting system.

2. A canopy according to claim 1, wherein the removable spanning member (18) is provided inside the canopy.

3. A canopy according to claim 1 or 2, wherein the spanning member (18) is removable from the upright members (10) without removing the canopy from the machine.

4. A canopy according to any of the preceding claims, wherein the canopy includes a recess (6) formed in the top of the canopy for accommodating the pair of lifting members (12) and/or the single lifting member (23) such that they do not protrude outside of the dimensions of the canopy.

5. A canopy according to any of the preceding claims, wherein the canopy includes an aperture (25) through which the single lifting member (23) can project.

6. A canopy according to claim 5 when dependent on claim 4, wherein the aperture (25) is provided in the recess (6).

7. A canopy according to any of the preceding claims, wherein the pair of lifting members (12) comprise lifting eyes or plates having eyes.

8. A canopy according to any of the preceding claims, wherein the pair of lifting members (12) are provided with at least one bolt hole (13) corresponding to bolt holes in the upright members.

9. A canopy according to claim 8, in which the spanning member (18) is provided with at least one bolt hole (19) at each end thereof corresponding to the bolt holes in the upright members.

10. A canopy according to any of the preceding claims, wherein a single lifting member or lifting eye (23) is attached to the spanning member (18).

11. A canopy according to 10, in which the single lifting member is attached centrally to the spanning member.

12. A canopy according to any of the preceding claims, further comprising a spacer between the spanning member and the canopy.

13. A canopy according to any of the preceding claims, wherein the upright lifting frame members (10) are provided integrally with the canopy for enclosing the machine.

14. A canopy according to any of the preceding claims, wherein the canopy is for enclosing a generator set.

15. A method of modifying a canopy which encloses a machine, the canopy comprising a pair of opposed upright lifting frame members (10) connected to a base (4) of the machine, the upright members each being attached to a pair of lifting members (12) for lifting the enclosed machine from two spaced locations,
**characterised by**:
removing the lifting members (12) from the upright frame members (10); and
connecting a removable spanning member (18) between the upright members (10), the removable spanning member including a single lifting member (23) located between the ends of the spanning member (18) for lifting the enclosed machine about a central location, thereby modifying the canopy from a two point lifting system to a one point lifting system.

## Patentansprüche

1. Abdeckung zum Umschließen einer auf einem Unterbau befestigten Maschine, wobei die Abdeckung folgendes umfasst:
ein Paar gegenüberliegende vertikale Elemente eines Hubgestells (10) für eine funktionsfähige Verbindung mit dem Unterbau (4) der Maschine, wobei jedes der vertikalen Elemente so angeordnet ist, dass es an einem Paar Hubelemente (12) befestigt wird, um die umschlossene Maschine von zwei beabstandeten Positionen aus zu heben; **dadurch gekennzeichnet, dass** ein abnehmbares Brückenelement (18) angeordnet ist, um funktionsfähig mit den vertikalen Elementen (10) verbunden zu werden und um an einem einzelnen Hubelement (23) befestigt zu werden, das sich zwischen den Enden des Brückenelements (18) befindet, um die umschlossene Maschine um eine in der Mitte gelegene Position zu heben, damit ein wechselbares Zweipunkt- oder Einpunkt-Hubsystem bereitgestellt wird.

2. Abdeckung nach Anspruch 1, wobei das abnehmbare Brückenelement (18) innerhalb der Abdeckung bereitgestellt wird.

3. Abdeckung nach Anspruch 1 oder 2, wobei das Brückenelement (18) von den vertikalen Elementen (10) abnehmbar ist, ohne die Abdeckung von der Maschine abzunehmen.

4. Abdeckung nach einem der vorhergehenden Ansprüche, wobei die Abdeckung eine Aussparung (6) aufweist, die oben an der Abdeckung ausgebildet ist, um das Paar der Hubelemente (12) und/oder das einzelne Hubelement (23) derart aufzunehmen, das diese nicht außerhalb der Abmessungen der Abdeckung hervorstehen.

5. Abdeckung nach einem der vorhergehenden Ansprüche, wobei die Abdeckung eine Öffnung (25) aufweist, durch welche das einzelne Hubelement (23) herausragen kann.

6. Abdeckung nach Anspruch 5, wenn dieser von Anspruch 4 abhängig ist, wobei die Öffnung (25) in der Aussparung (6) bereitgestellt wird.

7. Abdeckung nach einem der vorhergehenden Ansprüche, wobei das Paar der Hubelemente (12) Transportösen oder Platten mit Ösen umfasst.

8. Abdeckung nach einem der vorhergehenden Ansprüche, wobei das Paar der Hubelemente (12) mit wenigstens einem Bolzenloch (13) bereitgestellt wird, das mit den Bolzenlöchern in den vertikalen Elementen übereinstimmt.

9. Abdeckung nach Anspruch 8, wobei das Brückenelement (18) mit wenigstens einem Bolzenloch (19) am jedem Ende desselben bereitgestellt wird, das mit den Bolzenlöchern der vertikalen Elemente übereinstimmt.

10. Abdeckung nach einem der vorhergehenden Ansprüche, wobei ein einzelnes Hubelement oder eine einzelne Transportöse (23) an dem Brückenelement (18) befestigt ist.

11. Abdeckung nach Anspruch 10, wobei das einzelne Hubelement in der Mitte an dem Brückenelement befestigt ist.

12. Abdeckung nach einem der vorhergehenden Ansprüche, ferner ein Abstandstück zwischen dem Brückenelement und der Abdeckung umfassend.

13. Abdeckung nach einem der vorhergehenden Ansprüche, wobei die vertikalen Elemente des Hubgestells (10) integral in der Abdeckung zum Umschließen der Maschine bereitgestellt werden.

14. Abdeckung nach einem der vorhergehenden Ansprüche, wobei die Abdeckung zum Umschließen einer Generatoranlage dient.

15. Verfahren zur Modifikation einer eine Maschine umschließenden Abdeckung, wobei die Abdeckung ein Paar gegenüberliegende vertikale Elemente eines Hubgestells (10) umfasst, die mit dem Unterbau (4) der Maschine verbunden sind, wobei die vertikalen Elemente jeweils an einem Paar Hubelemente (12) befestigt sind, um die Maschine von zwei beabstandeten Positionen zu heben, **dadurch gekennzeichnet, dass** die Hubelemente (12) von den vertikalen Elementen des Gestells (10) entfernt werden; und ein abnehmbares Brückenelement (18) mit den vertikalen Elementen (10) verbunden wird, wobei das abnehmbare Brückenelement (18) ein einzelnes Hubelement (23) einschließt, das sich zwischen den Enden des Brückenelements (18) befindet, um die umschlossene Maschine um eine in der Mittel gelegene Position zu heben, damit die Abdeckung von einem Zweipunkt-Hubsystem auf ein Einpunkt-Hubsystem modifiziert wird.

## Revendications

1. Auvent pour enfermer une machine montée sur une base, l'auvent comprenant :
une paire d'éléments de bâti de levage droits opposés (10) pour le raccordement opérationnel avec une base (4) de la machine, les éléments droits étant chacun agencés pour être fixés sur une paire d'éléments de levage (12) afin de lever la machine enfermée de deux emplacements espacés ;
**caractérisé par** :
un élément traversant amovible (18) agencé pour pouvoir être raccordé de manière opérationnelle entre les éléments droits (10) et agencé pour être fixé à un seul élément de levage (23) positionné entre les extrémités de l'élément traversant (18) pour lever la machine enfermée autour d'un emplacement central, pour fournir ainsi un système de levage interchangeable à deux points ou à un point.

2. Auvent selon la revendication 1, dans lequel l'élément traversant amovible (18) est prévu à l'intérieur de l'auvent.

3. Auvent selon la revendication 1 ou 2, dans lequel l'élément traversant (18) peut être retiré des éléments droits (10) sans retirer l'auvent de la machine.

4. Auvent selon l'une quelconque des revendications précédentes, dans lequel l'auvent comprend un évidement (6) formé dans la partie supérieure de l'auvent pour loger la paire d'éléments de levage (12) et/ou l'élément de levage unique (23) de sorte qu'il ne soit pas hors des dimensions de l'auvent.

5. Auvent selon l'une quelconque des revendications, dans lequel l'auvent comprend une ouverture (25) à travers laquelle l'élément de levage unique (23) peut faire saillie.

6. Auvent selon la revendication 5, lorsqu'elle dépend de la revendication 4, dans lequel l'ouverture (25) est prévue dans l'évidement (6).

7. Auvent selon l'une quelconque des revendications précédentes, dans lequel la paire d'éléments de levage (12) comprend des oeillets de levage ou des plaques ayant des oeillets.

8. Auvent selon l'une quelconque des revendications précédentes, dans lequel la paire d'éléments de levage (12) sont prévus avec au moins un trou de boulon (13) correspondant aux trous de boulon dans les éléments droits.

9. Auvent selon la revendication 8, dans lequel l'élément traversant (18) est prévu avec au moins un trou de boulon (19) au niveau de chacune de ses extrémités correspondant aux trous de boulon dans les éléments droits.

10. Auvent selon l'une quelconque des revendications précédentes, dans lequel un seul élément de levage ou oeillet de levage (23) est fixé à l'élément traversant (18).

11. Auvent selon la revendication 10, dans lequel l'unique élément de levage est fixé de manière centrale à l'élément traversant.

12. Auvent selon l'une quelconque des revendications précédentes, comprenant en outre un dispositif d'espacement entre l'élément traversant et l'auvent.

13. Auvent selon l'une quelconque des revendications précédentes, dans lequel les éléments de bâti de levage droits (10) sont prévus de manière solidaire avec l'auvent pour enfermer la machine.

14. Auvent selon l'une quelconque des revendications précédentes, dans lequel l'auvent est prévu pour enfermer un groupe générateur.

15. Procédé pour modifier un auvent qui enferme une machine, l'auvent comprenant une paire d'éléments de bâti de levage droits opposés (10) raccordés à une base (4) de la machine, les éléments droits étant fixés à une paire d'éléments de levage (12) pour lever la machine enfermée de deux emplacements espacés,
**caractérisé par** les étapes consistant à :
retirer les éléments de levage (12) des éléments de bâti droits (10) ; et
raccorder un élément traversant amovible (18) entre les éléments droits (10), l'élément traversant amovible comprenant un seul élément de levage (23) positionné entre les extrémités de l'élément traversant (18) pour lever la machine enfermée autour d'un emplacement central, modifiant ainsi l'auvent d'un système de levage à deux points en un système de levage à un point.
